# FASCICULE DE BREVET EUROPEEN

(11) **EP 1 052 904 B1**
(45) Date de publication et mention de la délivrance du brevet: **08.10.2003**
(21) Numéro de dépôt: 99957360.3
(22) Date de dépôt: 03.12.1999
(51) Int. Cl.: A23B 7/154

(54) **PROCEDE DE TRAITEMENT DE FRUITS ET LEGUMES APRES RECOLTE UTILISANT L'EUGENOL ET/OU L'ISOEUGENOL**
VERFAHREN ZUR BEHANDLUNG VON OBST UND GEMÜSE NACH DER ERNTE MIT EUGENOL UND/ODER ISOEUGENOL
POST-HARVEST METHOD FOR TREATING FRUITS AND VEGETABLES USING EUGENOL AND/OR ISOEUGENOL

(30) Priorité: 03.12.1998 FR 9815305
(43) Date de publication de la demande: 22.11.2000
(73) Titulaire: XEDA INTERNATIONAL, 13670 Saint-Andiol (FR)
(72) Inventeur: BOMPEIX, Gilbert, F-75011 Paris (FR); SARDO, Alberto, F-13160 Chateaurenard (FR)
(74) Mandataire: Bernasconi, Jean Raymond
(86) Numéro de dépôt international: FR9903007
(87) Numéro de publication internationale: WO00032053

(56) Documents cités:
- EP-A- 0 795 272
- FR-A- 2 733 393
- US-A- 3 518 096
- US-A- 5 679 351

## Description

L'invention concerne un procédé de traitement de fruits et légumes après récolte par application auxdits fruits et légumes d'une composition traitante à base d'eugénol ou d'isoeugénol.

Il importe que les fruits et légumes ne perdent pas leur qualité organoleptique et conservent un aspect engageant lors de leur mise sur le marché pour une consommation rapide.

Or, après leur récolte, les fruits et légumes sont couramment stockés pendant des périodes relativement longues avant d'être mis sur le marché.

Les phénomènes susceptibles d'altérer l'aspect et le goût des fruits et légumes sont notamment la prolifération de champignons et de bactéries à leur surface. Ces détériorations sont encore plus rapides au niveau des microblessures et des entailles apparaissant sur la peau au cours du stockage ou de la manipulation des fruits et légumes.

De nombreux procédés existent dans l'état de la technique pour le traitement des fruits et légumes qui permettent de ralentir et/ou d'empêcher totalement ou partiellement la prolifération des bactéries et des champignons à la surface des fruits et légumes.

La plupart utilisent en tant que principes actifs des produits de synthèse qui présentent des risques de toxicité élevés pour le consommateur, de sorte que les doses homologuées sont constamment réduites. De ce fait, la recherche s'est essentiellement portée sur la mise au point de produits toujours plus efficaces.

Le développement de ces agents de traitement est très coûteux, au détriment de la rentabilité économique du traitement.

De façon à pallier ces inconvénients, des procédés utilisant des produits naturels ont été proposés.

Ainsi la demande FR 95 05 157 vise un procédé de traitement antifongique de fruits et légumes consistant à appliquer sur lesdits fruits et légumes une composition à base de terpènes. L'exemple de ce document illustre plus précisément une composition traitante à base de L-carvone. De façon plus générale, ce document fait allusion à l'utilisation de terpènes monooxygénés tels que le terpinéol, le menthol, la menthone, le cinéol (ou eucalyptol) et le citronellal.

Ces produits naturels sont cependant moins efficaces que bon nombre des produits de synthèse mis au point à ce jour.

L'invention repose sur la découverte de l'efficacité inattendue de deux terpènes dioxygénés qui sont l'eugénol et l'isoeugénol de formules : 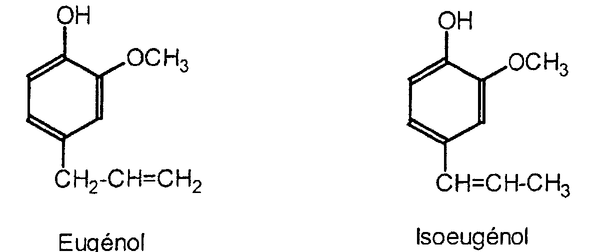 dans la protection des fruits et légumes contre les bactéries et les champignons.

L'une des caractéristiques particulièrement avantageuse de l'eugénol et de l'isoeugénol est le large spectre d'activité qui leur est associé : de fait, la supériorité de ces substances vis-à-vis des autres terpènes se manifeste dans le cas de souches batériennes très variées et dans le cas d'espèces très diverses de champignons.

Des souches bactériennes sont par exemple *Erwinia Carotovora ou Escherichia Coli*.

Comme exemples d'espèces de champignons, on peut citer *Fusarium oxysporum, Geotrichum candidum, Gloeosporium fructigenum, Penecillium digitatum, Pénicillium expansum, Phytophthora parasitica*.

L'invention concerne donc un procédé de traitement de fruits et légumes après récolte, caractérisé en ce qu'il comprend les étapes consistant à:
a - porter une composition traitante à une température de 40 à 60°C,
b - soumettre, pendant au plus 10 minutes, lesdits fruits et légumes à un traitement par douchage avec ladite composition traitante ou par immersion dans ladite composition traitante, et ceci avant stockage des fruits et légumes, ladite composition traitante comprenant, en pourcentage en poids :
   - de 10 à 40% d'un principe actif choisi parmi l'eugénol, un sel de l'eugénol acceptable sur le plan alimentaire, l'isoeugénol, un sel de l'isoeugénol acceptable sur le plan alimentaire et leurs mélanges ;
   - de 0 à 90% d'un tensioactif non-ionique ; et
   - de 0 à 90% d'un solvant choisi parmi les alcools aliphatiques, les glycols, l'eau, les esters alkyliques d'acides carboxyliques et leurs mélanges ;
le traitement de tubercules et de bulbes étant exclu.

A l'étape a), la température à laquelle est chauffée la composition traitante est ajustée en fonction de la nature du produit traité. De fait, il importe de ne pas provoquer la cuisson ou la dégradation des fruits et légumes. Seule la surface des fruits et légumes doit être chauffée par mise au contact avec la composition traitante. Selon un mode de réalisation préféré, la surface doit atteindre au moins 35°C, mieux encore au moins 40°C, par exemple entre 45 et 50°C.

De façon générale, on porte la composition traitante à une température comprise entre 40 et 60°C, et on ajuste parallèlement le temps de mise en contact de façon à atteindre la température souhaitée en surface des fruits et légumes.

De manière préférée, la composition traitante est portée entre 45 et 55°C, mieux encore entre 48 et 52°C par exemple 50°C.

A l'étape b), le temps de mise en contact est très court et dans tous les cas inférieur à 10 minutes. Il varie généralement entre 30 secondes et 10 minutes, avantageusement entre 30 secondes et 5 minutes. Un temps de contact de 2 à 3 minutes est le plus souvent suffisant.

Lorsque la durée de traitement par la composition chaude est dépassée, il est mis fin à l'application par tous moyens connus, notamment par simple arrêt de l'aspersion ou du douchage.

Dans une variante avantageuse, en particulier dans le cas de fruits et de légumes sensibles à la chaleur, le procédé peut comprendre une étape ultérieure consistant à refroidir rapidement les fruits ou légumes qui ont été mis au contact de la composition traitante chaude, et ce jusqu'à une température inférieure ou égale à la température ambiante.

Ce refroidissement peut être réalisé par circulation d'air ou par contact avec de l'eau (notamment immersion ou aspersion) dont la température est inférieure ou égale à la température ambiante.

Dans le cas de fruits et légumes particulièrement sensibles à la chaleur, tels que les pêches, abricots, tomates et poires, il est recommandé de les refroidir au préalable avant de procéder au traitement à chaud par ladite composition traitante. Le refroidissement doit prendre effet au coeur même des fruits et légumes. Les fruits et légumes sont par exemple soumis à un traitement par hydrocooling. Ceci peut être réalisé par douchage avec une composition aqueuse de refroidissement ou bien par immersion dans une composition aqueuse de refroidissement.

La température de la composition aqueuse de refroidissement est généralement comprise entre 0 et 15°C.

La température et le temps de prétraitement par la composition de refroidissement sont ajustés de façon à refroidir la totalité des fruits ou légumes traités et pas seulement leur couche externe. Ces paramètres dépendent principalement de la nature des fruits et légumes. A titre d'indication, on notera que la température de la composition de refroidissement est inférieure ou égale à la température conventionnelle de stockage préconisée dans la technique.

Selon un mode de réalisation préféré, la composition aqueuse de refroidissement présente une température de 0 à 10°C, mieux encore de 0 à 5-6°C. La durée de pré-traitement par la composition aqueuse de refroidissement est généralement comprise entre 2 minutes et 2 heures, le plus souvent entre 2 minutes et 60 minutes, par exemple entre 4 minutes et 30 minutes.

Cette variante est plus précisément décrite dans les demandes FR 96 03 100 et FR 98 08 995.

Le principe actif peut comprendre un sel de l'eugénol ou de l'isoeugénol acceptable sur le plan alimentaire. Des sels particulièrement préférés sont notamment les sels de métaux alcalins tels que les sels de sodium, les sels de lithium et les sels de potassium.

Selon un premier mode de réalisation de l'invention, le principe actif est préférablement un sel acceptable sur le plan alimentaire ou un mélange de tels sels. Dans ce cas en effet, on observe une plus faible volatilité du principe actif. De cette façon, la durée de protection des fruits et légumes après application de la composition traitante se trouve prolongée. De façon avantageuse, le principe actif comprend un ou plusieurs sels, acceptables sur le plan alimentaire, de l'eugénol.

Selon un second mode de réalisation de l'invention, le principe actif est choisi parmi l'eugénol, les sels de l'eugénol, acceptables sur le plan alimentaire, et leurs mélanges.

Il doit être entendu que la composition traitante peut comporter, en plus du principe actif de type eugénol ou isoeugénol, un autre principe actif contrecarrant le développement des bactéries et des champignons et/ou inhibant la germination des pommes de terre et des oignons.

Des exemples de tensioactifs non-ioniques utilisables selon l'invention sont notamment :
- le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécyclique) avec 30 moles d'oxyde d'éthylène;
- le produit de condensation d'un alkylphénol dans lequel la chaîne alkyle est en C₈-C₂₂ avec un oxyde d'alkylène en C₂-C₃. Là encore, les produits de condensation avec l'oxyde d'éthylène, l'oxyde de propylène ou bien un mélange d'oxyde d'éthylène et l'oxyde de propylène dans des proportions quelconques sont également avantageux. A titre d'exemple de tels tensioactifs, on peut citer le produit de condensation du n-nonylphénol avec 10 moles d'oxyde d'éthylène;
- le produit de condensation d'un acide gras de préférence en C₈-C₂₂ avec un oxyde d'alkylène en C₂-C₃, par exemple l'oxyde d'éthylène ou l'oxyde de propylène ou un mélange d'oxyde d'éthylène et d'oxyde de propylène dans des proportions quelconques. Ces produits de condensation présentent une chaîne alkoxylée au niveau de la fonction hydroxyle du groupe carboxylique. Des tensioactifs préférés de ce groupe sont les produits de condensation obtenus à partir de l'acide ricinoléique avec 10 moles d'oxyde d'éthylène.

Il doit être entendu que le tensioactif peut être constitué de plusieurs tensioactifs non ioniques.

Lorsque la composition traitante comprend des substances actives sous forme de sels, la présence d'un tensioactif est optionnelle. Celui-ci est alors généralement présent dans la composition traitante à raison de 0 à 20% en poids, par exemple de 10 à 20% en poids.

Lorsque la composition traitante ne comprend pas que des substances actives salifiées, le tensioactif peut représenter de 10 à 90% en poids, de préférence de 15 à 85% en poids de la composition et, par exemple, de 10 à 20% en poids.

Des exemples d'alcools aliphatiques préférés sont les alcanols en C₁-C₁₂.

Les glycols désignent, dans le cadre de l'invention, les alkylèneglycols et les polyalkylèneglycols.

On entend par alkylèneglycol, les alcools dihydroxylés dérivés d'hydrocarbures aliphatiques par remplacement de deux atomes d'hydrogène avec deux groupes hydroxyle. On préfère les (C₂-C₆) alkylèneglycol tels que l'éthylèneglycol et le propylèneglycol.

On entend par polyalkylèneglycol, les composés de formule

HO-(CₚH₂ₚO)ₙ-H

où p et n sont des entiers compris entre 2 et 6.

A titre d'exemple, on peut citer le dipropylèneglycol.

Selon l'invention le groupe CₚH₂ₚO est linéaire ou ramifié. Le polyalkylèneglycol préféré selon l'invention est le dipropylèneglycol.

Les esters alkyliques d'acides carboxyliques préférés sont les esters d'alkyle en (C₁-C₆) d'acide (C₁-C₆)alcanoïque tel que l'acétate de butyle.

L'eau est un solvant préféré.

Il doit être entendu que le solvant peut être constitué d'un mélange de solvants.

Lorsque la composition traitante comprend des substances actives sous forme de sels, la présence d'un solvant est fortement souhaitable. De préférence, le solvant représentera de 40 à 90% en poids de la composition, par exemple de 50 à 85% en poids, mieux encore de 50 à 80% en poids et généralement de 60 à 80% en poids. De façon avantageuse, le solvant est en ce cas de l'eau.

Lorsque la composition traitante ne comprend pas que des substances actives salifiées, la quantité de solvant peut être inférieure. Elle pourra avantageusement varier entre 0 et 80% en poids, mieux encore entre 0 et 50% en poids, par exemple entre 0 et 20% en poids.

Selon un autre mode de réalisation préféré, on ajoute à la composition traitante un ou plusieurs agents réduisant l'évaporation du principe actif. De tels agents sont connus dans la technique.

A titre d'exemple, on peut citer les polyterpènes dispersables dans l'eau; les esters de glycérol de la résine de pin; les gommes laques; les lécithines; les huiles siccatives; l'alcool polyvinylique; la polyvinylpyrrolidone; les polyacrylates de métaux alcalins; et la gomme arabique.

Les polymères de l'isoprène et le caoutchouc naturel sont des polyterpènes utilisables dans le cadre de l'invention.

Les esters de glycérol de la résine de pin sont des esters de l'acide abiétique.

Les gommes laques sont utilisables telles quelles ou sous forme purifiée comme la résine Shellac.

Les lécithines sont des mélanges de combinaisons d'esters des acides oléique, stéarique, palmitique avec l'acide glycérophosphorique et la chloline.

L'alcool polyvinylique, la polyvinylpyrrolidone, les polyacrylates de métaux alcalins et la gomme arabique sont des résines synthétiques hydrosolubles qui fonctionnent également comme agent réduisant l'évaporation du principe actif.

Il doit être entendu cependant que l'invention n'est en aucun cas limitée à l'utilisation de ces résines hydrosolubles spécifiques mais que tout autre type de résine hydrosoluble pourrait également convenir dès lors qu'elle est capable de réduire l'évaporation du principe actif.

Des exemples préférés d'huiles siccatives sont le linoléate de glycérol, l'acide linoléique et l'acide linolénique.

Lorsqu'il est présent, l'agent réduisant l'évaporation représente de 0 à 10% en poids, de préférence entre 1 et 10% en poids, de la composition traitante.

Une formulation préférée de la composition traitante est la suivante :
- 15 à 30% en poids de principe actif, mieux encore de 15 à 25% en poids;
- 0 à 20% en poids d'un tensioactif non ionique, mieux encore de 10 à 20% en poids ;
- 40 à 90% en poids d'un solvant (préférablement l'eau), mieux encore de 50 à 80% en poids.

Dans ce cas, il est avantageux d'utiliser des principes actifs sous forme de sels.

Une autre formulation préférée est la suivante :
- de 15 à 30% en poids de principe actif, mieux encore de 15 à 25% en poids ;
- de 10 à 85% en poids de tensioactif non ionique, mieux encore de 15 à 85% en poids ;
- de 0 à 50% en poids de solvant, mieux encore de 0 à 20% en poids.

Dans ce cas, il est avantageux d'utiliser des principes actifs non salifiés.

La composition traitante est préparée de façon conventionnelle en soi par simple mélange de ses constituants.

Lorsque la composition traitante comprend un sel acceptable sur le plan alimentaire, celui-ci peut être introduit dans la composition, lors de sa préparation, sous forme de sel ou bien sous forme neutre; dans cette dernière hypothèse, le sel est formé in situ par addition d'une base appropriée telle qu'un hydoxyde de métal alcalin (soude ou potasse).

La quantité de composition traitante devant être appliquée aux fruits et légumes dépend de la nature des fruits et légumes concernés et de la méthode d'application sélectionnée.

La quantité résiduelle de principe actif restant sur les fruits et légumes après application varie généralement après chaque application entre 0,4 et 20 g par tonne de fruits ou légumes traités.

Plus généralement, on ajustera la quantité appliquée de principe actif en fonction de la durée de stockage. L'eugénol et l'isoeugénol étant des produits odorants, il est préférable en effet qu'à l'issue du stockage, la majorité du principe actif se soit évaporée et ceci afin de ne pas altérer la valeur commerciale des fruits et légumes lors de leur mise sur le marché. La quantité de principe actif devant être appliquée dépend donc de la volatilité du principe actif et de la durée de stockage.

Le procédé de l'invention est particulièrement avantageux dans la mesure où il utilise un principe actif particulièrement efficace comme bactéricide et fongicide.

Les variantes de mises en oeuvre spécifiquement décrites ci-dessus sont elles aussi particulièrement intéressantes dans la mesure où elles contribuent à améliorer l'efficacité du principe actif :
- en augmentant la pénétration du principe actif dans la couche superficielle des fruits et légumes ;
- du fait de l'introduction dans la composition traitante d'agents réduisant la volatilité du principe actif;
- du fait de l'utilisation d'un sel acceptable sur le plan alimentaire de l'eugénol et/ou de l'isoeugénol.

Le traitement de tubercules (et par exemple de tubercules de pommes de terre) et celui de bulbes (tels que les bulbes d'oignons) est exclu du cadre de l'invention.

Les exemples suivants illustrent plus avant l'invention.

### EXEMPLE 1

Cet exemple illustre des compositions aqueuses utilisables telles quelles dans le procédé de l'invention. Ces compositions aqueuses contiennent en tant que principe actif l'eugénol sous forme de sel de sodium. Le tableau 1 donne la formulation des compositions 1.1 à 1.3.

**TABLEAU 1**

| EXEMPLE | TENSIOACTIF | EUGENOL | NaOH | eau |
|---|---|---|---|---|
| 1.1 | 0 | 15 | 8 | 77 |
| 1.2 | 15 | 16 | 4 | 65 |
| 1.3 | 0 | 14 | 2,4 | 83,6 |

Dans le tableau 1 sont rapportés les pourcentages en poids des différents constituants.

### EXEMPLE 2

L'activité fongicide de l'eugénol et de l'isoeugénol a été démontrée in vitro et comparée à celle d'autres terpènes.

Le milieu cristomalt utilisé pour les évaluations des activités fongicides contient 0,1% de cristomalt (extrait de malt) et 0,2% d'agar agar.

Ce milieu de culture est, après stérilisation, porté à 55°C. Le composé terpénique testé est alors introduit sous forme pure dans le milieu de culture, à chaud. Immédiatement après agitation, le milieu amendé par le produit terpénique est coulé en boîtes de Pétri (diamètre 9 cm, rempli avec 20 ml de milieu). Le milieu gélosé se solidifie en refroidissant. Les boîtes de Pétri sont alors inoculées avec des explantats (plugs) de 6 mm de diamètre prélevés sur le bord d'une culture du champignon testé obtenue sur milieu cristomalt.

L'inoculation est réalisée à 22°C.

La croissance mycélienne a été déterminée périodiquement (5 à 15 jours suivant l'espèce du champignon).

Les résultats sont exprimés dans le tableau 3 ci-dessous en termes de CMI qui est la teneur (en µg/ml) permettant d'obtenir une inhibition totale de la croissance mycélienne.

On notera que des plages de variation des CMI sont indiquées au tableau 2. De fait, chaque expérience a été réalisée plusieurs fois de telle sorte que pour chaque terpène et pour chaque espèce de champignon, une valeur minimale et une valeur maximale ont été obtenues.

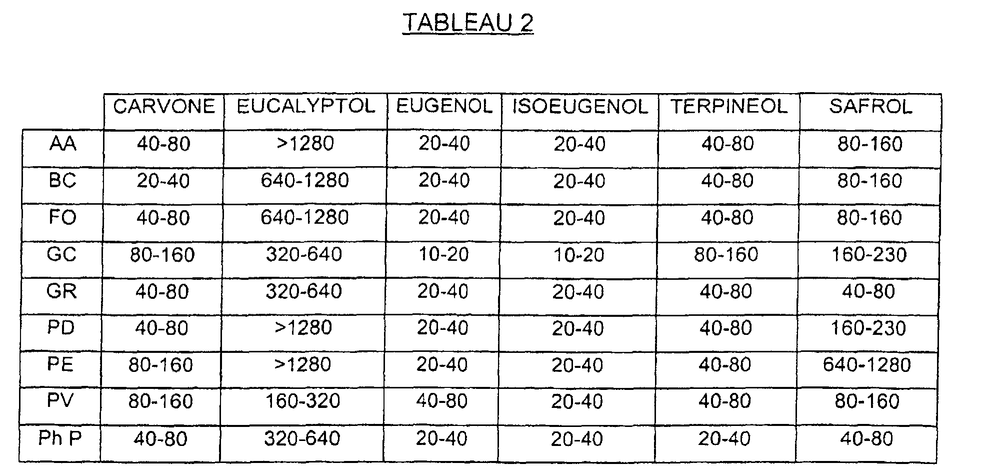

Dans tout le texte de la présente description, les significations des abrévations utilisées au tableau 2 sont les suivantes :
AA *Alternaria alternata*
BC *Botrytis cinerea*
FO *Fusarium oxysporum*
GC *Geotrichum candidum*
GR *Gliocladium roseum*
PD *Pénicillium digitatum*
PE *Pénicillium expansum*
PV *Phlyctaena vagabonda ("Gloeosporium")*
Ph P *Phytophtora parasitica*

L'analyse des résultats obtenus est réalisée simplement en utilisant le barème d'appréciation illustré au tableau 3 :

**TABLEAU 3**

| CMI incluse dans la plage délimitée par les deux valeurs indiquées en ppm (µg/ml) | Notes d'inhibition |
|---|---|
| 10-20 | 8 (Forte inhibition) |
| 20-40 | 7 |
| 40-80 | 6 |
| 80-160 | 5 |
| 160-320 | 4 |
| 320-640 | 3 |
| 640-1280 | 2 |
| >1280 | 1 (Faible inhibition) |

Au tableau 4, les résultats obtenus ont été exprimés en utilisant le barème du tableau 3.

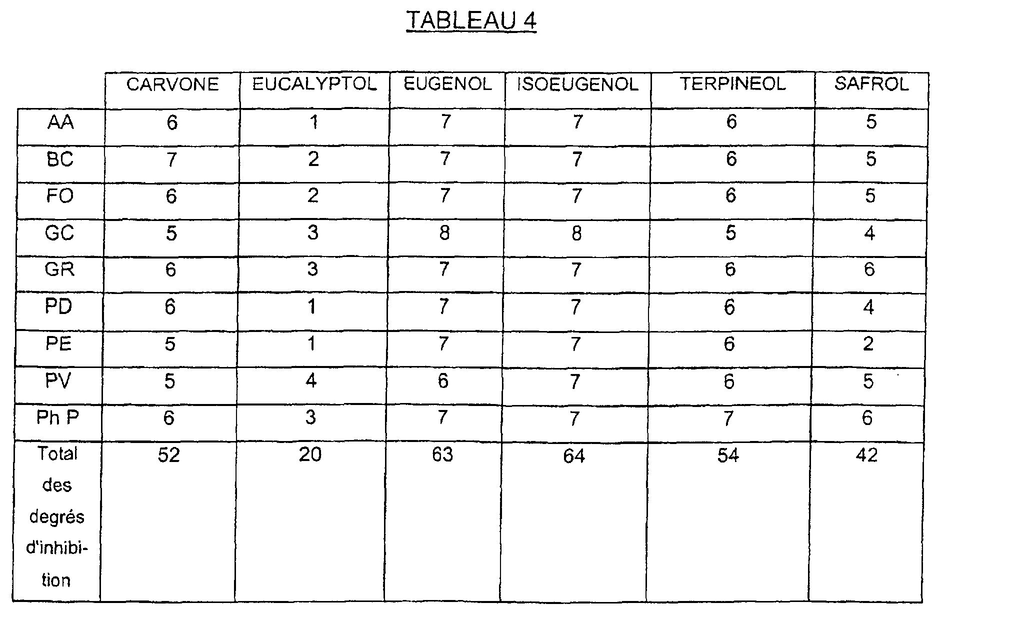

Il ressort clairement du tableau 4 que l'eugénol et l'isoeugénol sont nettement plus actifs que les autres terpènes.

### EXEMPLE 3

L'activité de l'eugénol et de l'isoeugénol sur la germination des spores a été évaluée in vitro et comparée à celle d'autres terpènes.

On utilise pour ce faire le protocole opératoire de l'exemple 2 sinon que la concentration d'eugénol et d'isoeugénol a été fixée à x µg/ml dans les milieux de culture utilisés et que l'on dépose 50 µl d'une suspension de spores ajustée à 100 000 spores/ml dans chaque boîte de Pétri.

La même expérience a été mis en oeuvre au départ d'un milieu de culture dépourvu de terpène (essai témoin).

Les résultats ont été évalués en utilisant les critères d'appréciation suivants :
++ : germination des spores comparables à celle du témoin
+ : réduction considérable du taux de spores germés
0 : spores non germés

Les tableaux 5, 6 et 7 rapportent les résultats obtenus pour 3 concentrations différentes des terpènes dans le milieu de culture, à savoir 40 µg/ml, 80 µg/ml et 1280 µg/ml.

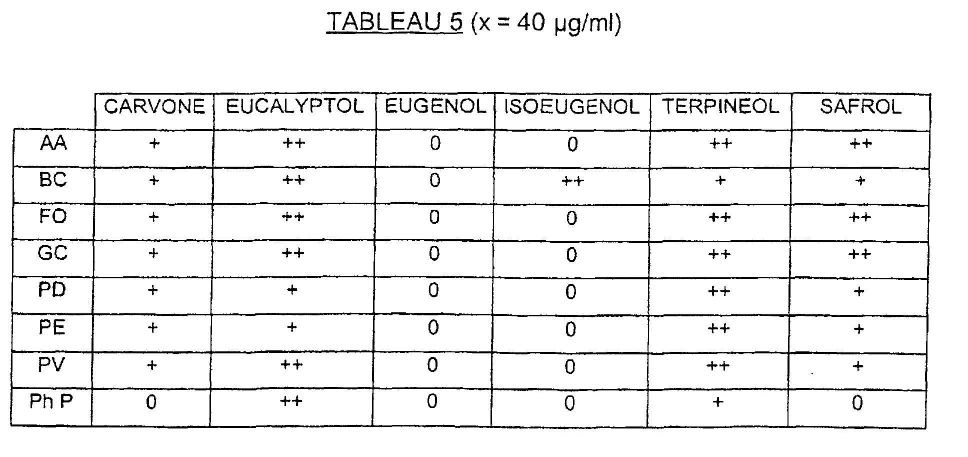

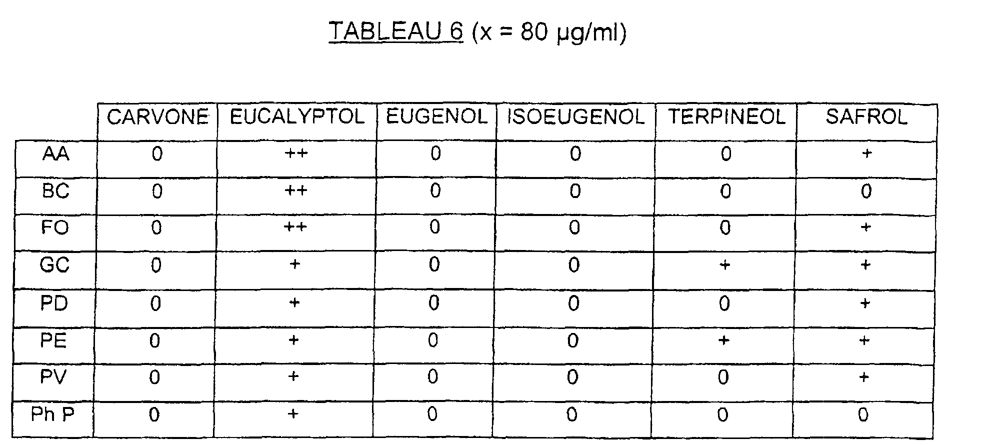

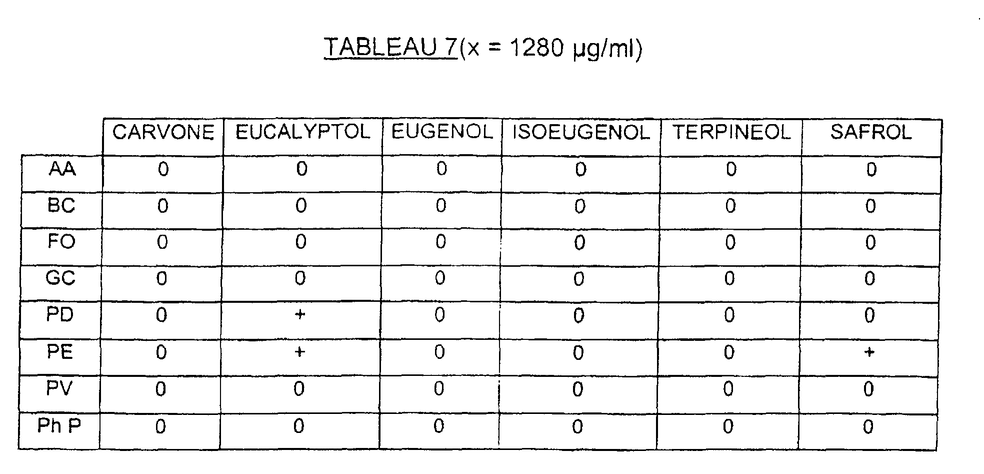

Il résulte clairement de ces différents tableaux que l'eugénol et l'isoeugénol présentent une activité bien supérieure à celle des autres terpènes. Une concentration de 40µg/ml suffit à inhiber la germination des spores.

### EXEMPLE 4

L'activité bactéricide de l'eugénol et de l'isoeugénol a été évaluée in vitro et comparée à celles d'autres terpènes.

Le milieu de culture utilisée est le milieu LB suivant:
Bactotryptone: 1% en poids
Extrait de levure : 0,5% en poids
NaCl : 0,5% en poids
Agar Agar : 1,2% en poids.

Une suspension de bactéries à 10⁶ CFU/ml a été réalisée dans de l'eau stérilisée à partir du milieu LB. 200µl de cette suspension bactérienne ont été ajoutés dans 20 ml de milieu de culture LB préalablement stérilisé et porté à 55°C. Le terpène testé est alors ajouté au milieu de culture. Après agitation, le milieu est immédiatement réparti en boîtes de Pétri. Le milieu se solidifie en refroidissant.

L'incubation est réalisée à 28°C lorsque la bactérie est *Erwinia Carotovora* et à 37°C lorsque la bactérie est *Escherichia Coli*.

On observe le développement du voile bactérien dans le milieu de culture. La même expérience est réalisée en l'absence de terpène (expérience témoin).

Les résultats sont évalués en utilisant l'échelle d'appréciation suivante :
++ : voile bactérien identique au témoin
+ : voile bactérien présent avec une nette réduction de croissance par rapport au témoin
- : absence totale de développement.

Le tableau 8 résume les résultats obtenus pour 3 concentrations différentes, à savoir 20, 80 et 320 µg/ml dans le cas de la bactérie *Erwinia Carotovora.*

**TABLEAU 8**

| Concentration en µg/ml | CARVONE | EUCALYPTOL | EUGENOL | ISOEUGENOL | TERPINEOL | SAFROL |
|---|---|---|---|---|---|---|
| 20 | ++ | ++ | + | + | ++ | ++ |
| 80 | + | ++ | - | - | + | ++ |
| 320 | - | ++ | - | - | - | + |

Dans une autre série d'expérience, on a déterminé la concentration nécessaire de terpène inhibant totalement le développement des bactéries (CMI). Le protocole utilisé est celui décrit ci-dessus. Les résultats obtenus sont rapportés dans le tableau 9 ci-dessous.

**TABLEAU 9**

| CMI en µg/ml | CARVONE | EUCALYPTOL | EUGENOL | ISOEUGENOL | TERPINEOL | SAFROL |
|---|---|---|---|---|---|---|
| *Erwinia sp*. | 80-160 | 320-640 | 20-40 | 20-40 | 80-160 | 320-640 |
| Escherichia *sp*. | 320-640 | >640 | 40-80 | 40-80 | 160-320 | >640 |

Sur les deux bactéries, l'eugénol et l'isoeugénol se révèlent les plus actifs.

## Revendications

1. Procédé de traitement de fruits et légumes après récolte, **caractérisé en ce qu'**il comprend les étapes consistant à :
a - porter une composition traitante à une température de 40 à 60°C,
b - soumettre, pendant au plus 10 minutes, lesdits fruits et légumes à un traitement par douchage avec ladite composition traitante ou par immersion dans ladite composition traitante, et ceci avant stockage des fruits et légumes, ladite composition traitante comprenant, en pourcentage en poids :
- de 10 à 40% d'un principe actif choisi parmi l'eugénol, un sel de l'eugénol acceptable sur le plan alimentaire, l'isoeugénol, un sel de l'isoeugénol acceptable sur le plan alimentaire et leurs mélanges ;
- de 0 à 90% d'un tensioactif non-ionique ; et
- de 0 à 90% d'un solvant choisi parmi les alcools aliphatiques, les glycols, l'eau, les esters alkyliques d'acides carboxyliques et leurs mélanges ;
le traitement de tubercules et de bulbes étant exclu.

2. Procédé de traitement selon la revendication 1, **caractérisé en ce que**, avant traitement des fruits et légumes par ladite composition traitante , ceux-ci sont refroidis à coeur par douchage avec une composition aqueuse de refroidissement ou par immersion dans une composition aqueuse de refroidissement, ladite composition aqueuse de refroidissement présentant une température supérieure ou égale à 0°C et inférieure ou égale à 15°C.

3. Procédé de traitement selon l'une quelconque des revendications précédentes, **caractérisé en ce que** ledit principe actif est un sel acceptable sur le plan alimentaire ou un mélange de tels sels.

4. Procédé selon l'une quelconque des revendications précédentes, **caractérisé en ce que** le principe actif est l'eugénol, un sel acceptable sur le plan alimentaire de l'eugénol ou un mélange de ceux-ci.

5. Procédé selon l'une quelconque des revendications précédentes, **caractérisé en ce que** ladite composition traitante comprend en outre un ou plusieurs agents réduisant l'évaporation dudit principe actif.

6. Procédé de traitement selon la revendication 4, **caractérisé en ce que** les agents réduisant l'évaporation sont choisis parmi les polyterpènes dispersables dans l'eau; les esters de glycérol de la résine de pin; les gommes laques; les lécithines; les huiles siccatives; l'alcool polyvinylique; la polyvinylpyrrolidone; les polyacrylates de métaux alcalins; et la gomme arabique.

7. Procédé selon l'une quelconque des revendications 5 ou 6, **caractérisé en ce que** ladite composition traitante comprend de 1 à 10% en poids d'un ou plusieurs agents réduisant l'évaporation.

8. Procédé selon l'une quelconque des revendications précédentes, caracérisé en ce que ladite composition traitante est portée à une température de 45 à 50° C à l'étape (a).

9. Procédé selon l'une quelconque des revendications précédentes, **caractérisé en ce que** ladite composition traitante comprend essentiellement :
- de 15 à 30% en poids de principe actif ;
- de 0 à 20% en poids de tensioactif non ionique ;
- de 40 à 90% en poids d'un solvant.

10. Procédé selon la revendication 9, **caractérisé en ce que** le solvant est l'eau et le principe actif est un sel ou un mélange de sels.

11. Procédé selon l'une quelconque des revendications 1 à 8, **caractérisé en ce que** la composition traitante comprend essentiellement :
- de 15 à 30% en poids de principe actif ;
- de 15 à 85% en poids de tensioactif non ionique ;
- de 0 à 50% en poids de solvant.

12. Procédé selon la revendication 11, **caractérisé en ce que** le principe actif est choisi parmi l'eugénol, l'isoeugénol et leurs mélanges.

## Patentansprüche

1. Verfahren zur Behandlung von Früchten und Gemüse nach der Ernte, **dadurch gekennzeichnet, dass** es die Schritte umfasst:
a - Bringen einer Behandlungszusammensetzung auf eine Temperatur von 40 bis 60°C,
b - Unterwerfen der Früchte und Gemüse einer Behandlung für höchstens 10 Minuten durch Besprühen mit der Behandlungszusammensetzung oder durch Eintauchen in die Behandlungszusammensetzung vor der Lagerung der Früchte und Gemüse, wobei die Behandlungszusammensetzung in Gewichtsprozent umfasst:
- 10 bis 40% eines Wirkstoffs, ausgewählt aus Eugenol, einem lebensmittelverträglichen Eugenolsalz, Isoeugenol, einem lebensmittelverträglichen Isoeugenolsaiz und deren Gemischen,
- 0 bis 90% eines nicht-ionischen Tensids und
- 0 bis 90% eines Lösungsmittels, ausgewählt aus aliphatischen Alkoholen, Glycolen, Wasser, Carbonsäurealkylestern und deren Gemischen,
wobei die Behandlung von Knollen und Zwiebeln ausgeschlossen ist.

2. Verfahren zur Behandlung nach Anspruch 1, **dadurch gekennzeichnet, dass** die Früchte und Gemüse vor der Behandlung durch die Behandlungszusammensetzung bis zum Kern gekühlt werden durch Besprühen mit einer wässrigen Kühlzusammensetzung oder durch Eintauchen in eine wässrige Kühlzusammensetsung, wobei die wässrige Kühlzusammensetzung eine Temperatur über oder gleich 0°C und unter oder gleich 15°C besitzt.

3. Verfahren zur Behandlung nach einem der vorhergehenden Ansprüche, **dadurch gekennzeichnet, dass** der Wirkstoff ein lebensmittelverträgliches Salz oder ein Gemisch dieser Salze ist.

4. Verfahren nach einem der vorhergehenden Ansprüche, **dadurch gekennzeichnet, dass** der Wirkstoff Eugenol, ein lebensmittelverträgliches Eugenolsalz oder ein Gemisch davon ist.

5. Verfahren nach einem der vorhergehenden Ansprüche, **dadurch gekennzeichnet, dass** die Behandlungszusammensetzung außerdem ein oder mehrere Mittel umfasst, die das Verdampfen des Wirkstoffs verringern.

6. Verfahren zur Behandlung nach Anspruch 4, **dadurch gekennzeichnet, dass** die Mittel, die das Verdunsten verringern, ausgewählt sind aus in Wasser dispergierbaren Polyterpenen; den Glycerinestern aus Fichtenharz; Schelllacken; Lecithinen; Trockenölen; Polyvinylalkohol; Polyvinylpyrrolidon; Alkalimetallpolyacrylaten und Gummi arabicum.

7. Verfahren nach einem der Ansprüche 5 oder 6, **dadurch gekennzeichnet, dass** die Behandlungszusammensetzung 1 bis 10 Gew.% eines oder mehrerer die Verdunstung reduzierender Mittel umfasst.

8. Verfahren nach einem der vorhergehenden Ansprüche, **dadurch gekennzeichnet, dass** die Behandlungszusammensetzung im Schritt (a) auf eine Temperatur von 45 bis 50°C gebracht wird.

9. Verfahren nach einem der vorhergehenden Ansprüche, **dadurch gekennzeichnet, dass** die Behandlungszusammensetzung im Wesentlichen umfasst:
- 15 bis 30 Gew.% Wirkstoff,
- 0 bis 20 Gew.% nicht-ionisches Tensid,
- 40 bis 90 Gew.% eines Lösungsmittels.

10. Verfahren nach Anspruch 9, **dadurch gekennzeichnet, dass** das Lösungsmittel Wasser ist und der Wirkstoff ein Salz oder ein Gemisch von Salzen ist.

11. Verfahren nach einem der Ansprüche 1 bis 8, **dadurch gekennzeichnet, dass** die Behandlungszusammensetzung im Wesentlichen umfasst:
- 15 bis 30 Gew.% Wirkstoff,
- 15 bis 85 Gew.% nicht-ionisches Tensid,
- 0 bis 50 Gew.% Lösungsmittel.

12. Verfahren nach Anspruch 11, **dadurch gekennzeichnet, dass** der Wirkstoff ausgewählt ist aus Eugenol, Isoeugenol und deren Gemischen.

## Claims

1. Process for the post-harvest treatment of fruit and vegetables, **characterized in that** it comprises stages consisting of:
a - raising a treatment composition to a temperature of 40 to 60°C,
b - subjecting said fruit and vegetables for at the most 10 minutes to a treatment by spraying said treatment composition or by immersion in said treatment composition prior to the storage of the fruit and vegetables, said treatment composition comprising, in percentages by weight:
- 10 to 40% of an active principle chosen from among eugenol, an eugenol salt fit for human food, isoeugenol, an isoeugenol salt fit for human food and mixtures thereof,
- 0 to 90% of a nonionic surfactant and
- 0 to 90% of a solvent chosen from among aliphatic alcohols,
glycols, water, carboxylic acid alkyl esters and mixtures thereof, the treatment of tubers and bulbs being excluded.

2. Treatment process according to claim 1, **characterized in that**, prior to the treatment of the fruit and vegetables with said treatment composition, they are core cooled by spraying with an aqueous cooling composition or by immersion in an aqueous cooling composition, which has a temperature equal to or above 0°C and equal to or below 15°C.

3. Treatment process according to any one of the preceding claims, **characterized in that** said active principle is a salt fit for human food or a mixture of such salts.

4. Process according to any one of the preceding claims, **characterized in that** the active principle is eugenol, an eugenol salt fit for human food or a mixture thereof.

5. Process according to any one of the preceding claims, **characterized in that** said treatment composition also comprises one or more agents reducing the evaporation of said active principle.

6. Treatment process according to claim 4, **characterized in that** the evaporation reducing agents are chosen from among water-dispersible polyterpenes, pine resin glycerol esters, lac gums, lecithins, drying oils, polyvinyl alcohol, polyvinyl pyrrolidone, alkali metal polyacrylates and gum arabic.

7. Process according to either of the claims 5 and 6, **characterized in that** said treatment composition comprising 1 to 10 wt.% of one or more evaporation reducing agents.

8. Process according to any one of the preceding claims, **characterized in that** said treatment composition is raised to a temperature of 45 to 50°C in stage (a).

9. Process according to any one of the preceding claims, **characterized in that** said treatment composition essentially comprises:
- 15 to 30 wt.% active principle,
- 0 to 20 wt.% nonionic surfactant,
- 40 to 90 wt.% of a solvent.

10. Process according to claim 9, **characterized in that** the solvent is water and the active principle is a salt or a mixture of salts.

11. Process according to any one of the claims 1 to 8, **characterized in that** the treatment composition essentially comprises:
- 15 to 30 wt.% active principle,
- 15 to 85 wt.% nonionic surfactant,
- 0 to 50 wt.% solvent.

12. Process according to claim 11, **characterized in that** the active principle is chosen from among eugenol, isoeugenol and mixtures thereof.
